# EUROPEAN PATENT SPECIFICATION

(11) **EP 2 814 779 B1**
(45) Date of publication and mention of the grant of the patent: **26.09.2018**
(21) Application number: 13703609.1
(22) Date of filing: 12.02.2013
(51) Int. Cl.: C02F 1/469, B01D 61/46, B01D 61/52

(54) **ELECTRODIALYSIS MACHINE FOR DESALINATING WATER WITH A HIGH CONCENTRATION OF DISSOLVED SALTS**
ELEKTRODIALYSEMASCHINE ZUM ENTSALZEN VON WASSER MIT EINER HOHEN KONZENTRATION VON GELÖSTEN SALZEN
MACHINE D'ÉLECTRODIALYSE POUR LE DESSALEMENT D'EAU AYANT UNE CONCENTRATION ÉLEVÉE DE SELS DISSOUS

(30) Priority: 15.02.2012 IT PD20120037
(43) Date of publication of application: 24.12.2014
(73) Proprietor: Luise, Marco, 35124 Padova (IT); Luise, Silvia, 35125 Padova (IT)
(72) Inventor: LUISE, Giuseppe, I-35125 Padova (IT)
(74) Representative: Modiano, Micaela Nadia
(86) International application number: PCT/EP2013/052782
(87) International publication number: WO 2013/120846

(56) References cited:
- US-A- 5 736 023
- US-A- 6 042 701
- US-A1- 2008 057 398
- US-A1- 2009 159 460
- US-A1- 2009 314 718

## Description

The present invention relates to an electrodialysis machine for desalinating water with a high concentration of dissolved salts.

Today the need is increasingly felt, for both civil and industrial uses, to be able to use machinery capable of producing desalinated water starting from water with a very high degree of salinity such as seawater can have.

To this end, today devices are known and used, known as electrodialysis machines, in which inside a container there are, owing to the presence of alternating ion-conducting membranes, i.e. cationic and anionic, a series of chambers containing water with a high degree of salinity; by applying a potential difference through two electrodes to two opposite sides of the container, the salts move away from the saline solutions thanks to the alternating use of cationic and anionic membranes, which respectively allow the passage of positive ions only and of negative ions only; by applying a certain potential difference a direct current is created: the positive ions pass through the cationic membrane, whereas the negative pass through the anionic membrane.

At the end of the process some compartments are desalinated, whereas others will be enriched with ions.

Therefore the solvent, which is pure water since these are aqueous solutions, is present in alternating compartments.

Such a general design plan is the implementation basis of the apparatuses for electrodialysis known today, in which the ion depletion water compartments are crossed by a first water flow, whereas the ion enrichment water compartments are designed to be crossed by a second flow of water for the removal of the ions which abandon the first flow through the ion-conducting membranes.

Such apparatuses for electrodialysis known today exhibit some drawbacks.

A first drawback is linked to the low efficiency of such apparatuses, since not all the water of the water flow to be desalinated flows over the ion-conducting membranes, and as a consequence the flow of ions produced by the electrodes and made possible by the ion-conducting membranes only affects part of the water flow to be desalinated, thus resulting in a desalination that is partial and not optimal.

A second drawback is linked to the progressive decrease in the filtering capacity of the ion-conducting membranes, which is caused by the accumulation of non-ionic particles on the surfaces of the membranes; these are colloidal particles present in suspension in the feed water, which cannot pass through the membranes and which are thus deposited on them, deteriorating their efficiency sooner or later.

In order to prevent such drawback, the water flows are enriched with special chemical additives which are adapted to neutralize the effect of such colloidal particles.

Moreover such decrease in filtration efficiency of the ion-conducting membranes as a consequence limits the optimal electric field intensity regime that can be imposed.

A further drawback of the conventional apparatuses consists in the fact that the same particles which are deposited on the ion-conducting membranes also scale up the surface of the electrodes, limiting their correct operation, and thus contributing to further impair the efficiency of the electrodialysis apparatus.

Moreover, the electrolytic reactions at the electrodes determine the formation of particles that, by propagating to the ion exchange chambers, are also deposited on the ion-conducting membranes, thus contributing to impair their functionality.

The electrodes must therefore undergo periodic cleaning operations, which require the arrest of the desalination process and the use of adapted washing cycles, with consequent additional costs.

US2009314718A1, US6042701A and US2008/057398A1 disclose known electrodialysis machines.

The aim of the present invention is to provide an electrodialysis machine for desalinating water with a high concentration of dissolved salts, which is capable of overcoming the above limitations of the electrodialysis apparatuses known today.

Within this aim, an object of the invention is to provide an electrodialysis machine that is capable of enabling a greater and stronger flow of ions between the electrodes, and is thus capable of higher efficiency than conventional apparatuses.

Another object of the invention is to provide an electrodialysis machine in which the functionality of the ion-conducting membranes can be easily restored without resorting to costly chemical additives.

Another object of the invention is to provide an electrodialysis machine that is capable of ensuring the functionality of the electrodes.

Another object of the invention is to provide an electrodialysis machine that has much better filtering capacity than the conventional apparatuses, and is capable of treating brackish waters with a high degree of salinity, in order to reduce the saline content thereof at will.

Another object of the invention is to provide an electrodialysis machine for desalinating water with a high concentration of dissolved salts, that can be made using conventional systems and technologies.

In accordance with the invention, there is provided an electrodialysis machine as defined in the appended claims.

Further characteristics and advantages of the invention will become more apparent from the description of a preferred, but not exclusive, embodiment of the electrodialysis machine according to the invention, which is illustrated by way of non-limiting example in the accompanying drawings wherein:
Figure 1 is a schematic side view of an electrodialysis machine according to the invention;
Figure 2 is an exploded perspective view of a first part of the electrodialysis machine according to the invention;
Figure 3 is an exploded perspective view of a second part of the electrodialysis machine according to the invention;
Figure 3a is a view of a portion of a detail in Figure 3;
Figure 4 is an exploded perspective view of a third part of the electrodialysis machine according to the invention;

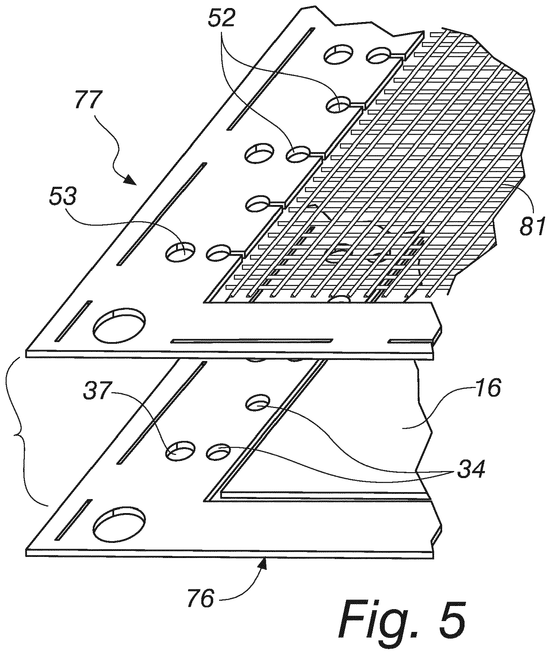

Figure 5 is an exploded view of a detail of an electrode chamber of an electrodialysis machine according to the invention;
Figure 6 is a view of two consecutive reaction chambers of an electrodialysis machine according to the invention;
Figure 7 is a plan view of the hydraulic means for the exchange of water flows of an electrodialysis machine according to the invention;
Figure 8 is a perspective view of the heads of an electrodialysis machine according to the invention.

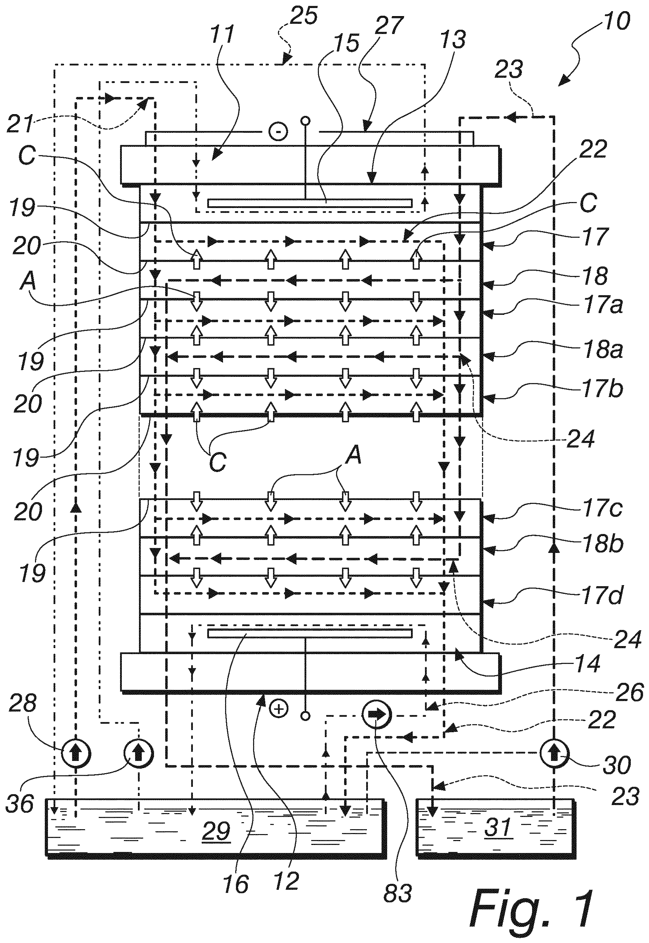

With reference to the figures, an electrodialysis machine according to the invention, for desalinating water with a high concentration of dissolved salts, is generally designated in Figure 1 with the reference numeral 10.

Such electrodialysis machine 10 comprises, between two heads 11 and 12, two opposite electrode chambers 13 and 14, containing electrodes 15 and 16 respectively, having opposite polarities.

Between the two electrode chambers 13 and 14 a plurality of reaction chambers of two alternating types are arranged, first, ionic enrichment chambers 17, 17a, 17b, 17c and 17d, and second ionic depletion chambers 18, 18a and 18b.

Each chamber of a first type is open onto a laterally adjacent chamber of the second type by interposition of an ion-conducting membrane 19 and 20.

For example, the first, ion-conducting membranes 19 allow the migration of anions A from the second chambers 18, 18a and 18b to the adjacent first chambers 17, 17a and 17c, toward the second, positively-charged electrode 16.

Similarly, the second, ion-conducting membranes 20 allow the migration of cations C from the second chambers 18, 18a and 18b to the adjacent first chambers 17a, 17b and 17d, toward the first, negatively-charged electrode 15.

The reaction chambers 17, 17a, 17b, 17c, 17d, 18, 18a and 18b are to be understood as indicative and illustrative of a stack of alternating reaction chambers which is to be understood as being providable with a selected number of alternating reaction chambers, according to necessity and requirements.

The first chambers 17, 17a, 17b, 17c and 17d are hydraulically connected to each other and to the heads 11 and 12 so as to form a first hydraulic circuit 21 for the transit of a first water flow 22 with ionic enrichment.

The second chambers 18, 18a and 18b are hydraulically connected to each other and to the heads 11 and 12 so as to form a second hydraulic circuit 23 for the transit of a second water flow 24, which is being desalinated.

Each electrode chamber 13 and 14 is supplied by a corresponding independent hydraulic circuit 25 and 26, such hydraulic circuits 25 and 26 being described in more detail hereinbelow.

There are hydraulic means 27 for the exchange of first 22 and second 24 water flows, which, together with the inversion of polarities of the electrodes, allow washing of the ion-conducting membranes 19 and 20.

The first hydraulic circuit 21 for the first flow 22 comprises a first pump 28 adapted to draw from a first tank of water with high salinity 29, and is adapted to discharge the first flow 22, which is enriched with ions, into that first tank 29.

The second hydraulic circuit 23 for the second flow 24 comprises a second pump 30 adapted to draw either from the first tank 29, or, as in Figure 1, from a second tank 31 of water to be desalinated, and is adapted to discharge such second flow 24, of desalinated water, into that second tank 31.

The first tank 29 is understood to be either a container of water with a high concentration of salts, or a water source of indefinite capacity, such as the sea, or a well, or an aqueduct.

The second tank 31, for the diluate, i.e. the solution with low or zero salinity, is understood to be an actual container.

The hydraulic circuits 25 and 26 for the electrode chambers 13 and 14 draw water from and return it to the first tank 29 if the latter can be considered a source of indefinite capacity.

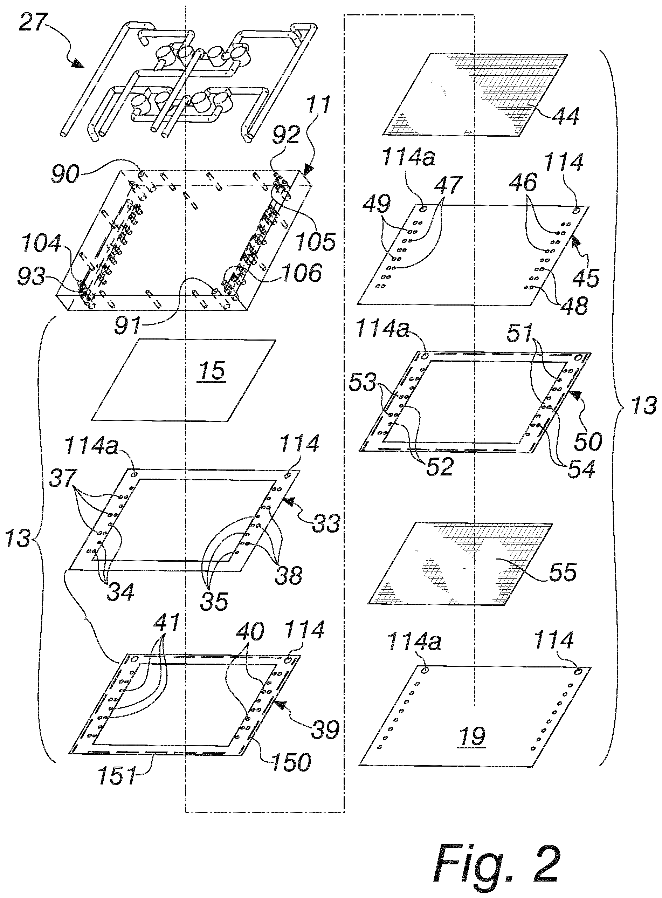

Each one of the electrode chambers 13 and 14, of which a first upper electrode chamber 13 is shown in an exploded view in Figure 2, is formed directly against the upper distribution head 11, and comprises the electrode 15, which is flat and made of biplanar mesh, i.e. constituted by two layers of filaments, parallel in the same layer and oriented transversely between layers, of titanium, conveniently covered with other elements, for example oxides, for galvanic deposition, for the purpose of increasing its electrical conductivity and resistance to aggression by products of electrolysis.

The electrode 15 is arranged inside a first flat sealing gasket 33, for example made of rubber, which is provided with first holes 34 and 35, to be understood as part of the hydraulic circuit 25 corresponding to the first electrode 15, for the entry and the exit of the water pumped by a third pump 36 and drawn from the first tank 29.

The thickness of such first flat gasket 33 is thus such as to accommodate within it the first electrode 15.

The first sealing gasket 33 has second holes 37 and 38 for the passage of the first 22 and second 24 water flows, which thus cooperate in defining the first 21 and second 23 hydraulic circuits.

Below the first gasket 33 there is a second distribution gasket 39, which is provided with first distribution holes 40, which are open toward the inside of the second gasket 39 so as to form nozzles for introducing the water flow inside the electrode chamber 13, and first discharge manifold holes 41, which are formed on the opposite side of the second gasket 39 and are also open toward the inside of the second gasket 39.

Similarly to the first gasket 33, the second gasket 39 also has second holes 42 and 43 for the passage of the first 22 and second 24 water flows, which thus cooperate in defining the first 21 and second 23 hydraulic circuits.

Inside the second gasket 39 there is a biplanar mesh 44, which is adapted to promote turbulence in the electrode chamber 13.

Such biplanar mesh 44 is made of plastic material, and can be provided as a self-contained component, or can be monolithic with the second gasket 39, which is also provided by molding of plastic material.

The third pump 36, therefore, draws water from the first tank 29 and drives it inside the electrode chamber 13 through corresponding holes and passages defined in the upper head 11, which are described in more detail hereinbelow, and through the first holes 35 in the first gasket 33 and through the first distribution holes 40 in the second gasket 39; the water, after having uniformly flowed over the electrode 15 thanks to the holes in the biplanar mesh 44, exits from the first manifold holes 41 in the second gasket 39 and from the first holes 37 in the first gasket 33.

Below the second gasket 39 and the biplanar mesh 44 there is an ion-conducting shielding membrane 45, which is adapted to prevent the migration to the adjacent reaction chambers 17 and 18 of any unwanted products of the electrolytic reactions that occur at the electrode 15.

Such ion-conducting shielding membrane 45 does not participate in the main process of electrodialysis, but, rather, it protects the ion-conducting membranes 19 and 20 that participate in the process, thus prolonging their useful life.

The shielding membrane 45 also has first holes 46 and 47 for the passage of water originating from the hydraulic circuit 25 of the first electrode chamber 13, and second holes 48 and 49 for the passage of the first 22 and second 24 water flows, which thus cooperate in defining the first 21 and second 23 hydraulic circuits.

The shielding membrane 45 is closed between the second gasket 39 and a similar, third gasket 50.

Such third distribution gasket 50 has first distribution holes 51, which are open toward the inside and form nozzles for introducing the water flow on the surface of the shielding membrane 45 that is opposite to the electrode 15, and first discharge manifold holes 52, which are formed on the opposite side of the third gasket 50 and are also open toward the inside of the third gasket 50.

Similarly to the first and second gaskets, the third gasket 50 also has second holes 53 and 54 for the passage of the first 22 and second 24 water flows, which thus cooperate in defining the first 21 and second 23 hydraulic circuits.

Within the third gasket 50, and below the shielding membrane 45, a second biplanar mesh 55 is arranged which is adapted to facilitate the turbulence of the water flow in transit.

Through the first holes 46 on the shielding membrane 45 and the first holes 51 on the third gasket 50, and arriving at the lower face of the membrane 45, comes a water flow directly from the head 11, i.e. a water flow that does not pass over the electrode 15 and thus does not carry products of electrolysis with it.

The water flow that passes through the third gasket 50 determines a highly conductive water volume between the screen membrane 45 and the underlying first ion-conducting membrane 19 which participates in the electrodialysis process.

The electrode chamber 13 terminates in the first, active ion-conducting membrane 19.

The first ion-conducting membrane 19 has only holes 56 and 57 for the passage of the first 22 and second 24 water flows, which thus cooperate in defining the first 21 and second 23 hydraulic circuits, whereas there are no holes at the first holes of the overlying third gasket 50 for the transit of the water flow of the hydraulic circuit 25 associated with the electrolytic chamber 13, the water flow being thus contained within the third gasket 50, without affecting the migration of ions through the ion-conducting membrane 19.

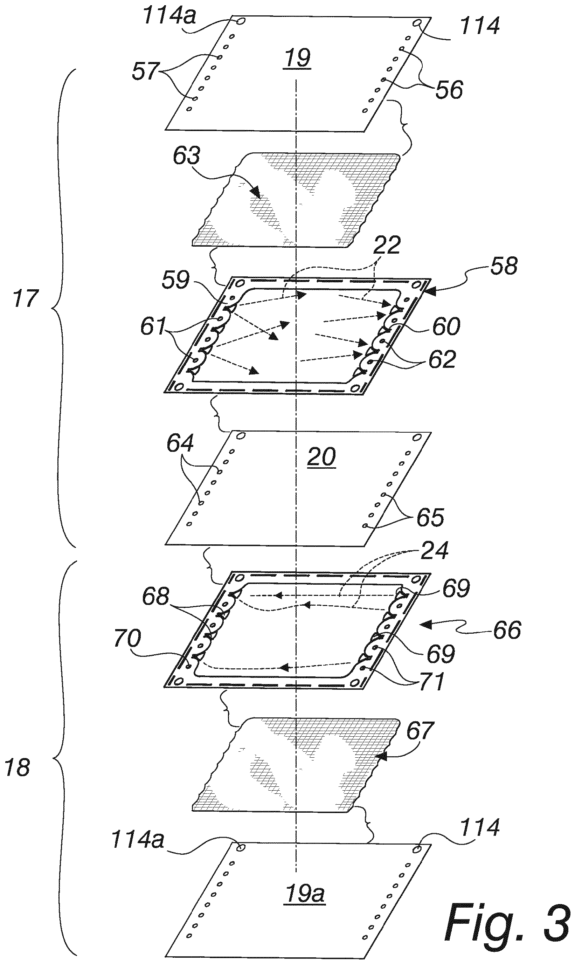

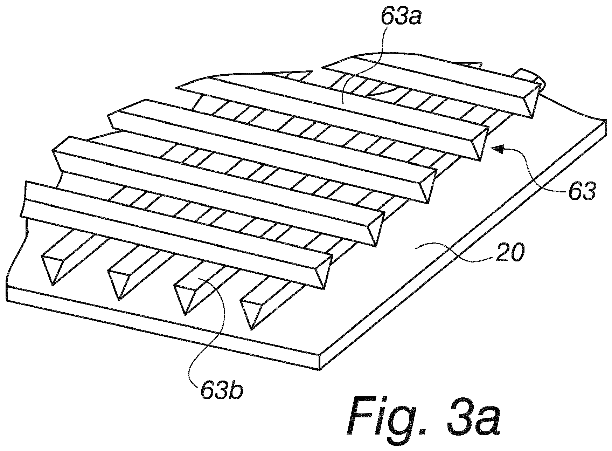

An example of reaction chambers 17 and 18 is shown in Figure 3.

The first reaction chamber 17 is for example adapted to allow the passage of the first water flow 22, with high salinity, as shown schematically in Figure 1.

Between the two first 19 and second 20 ion-conducting membranes, a first diffusion gasket 58 is interposed which has on one side first contoured openings 59, for the inflow of a flow of water, for example the first water flow 22, with high salinity, and, on the opposite side, second contoured openings 60 for the outflow of the first flow 22 from the first reaction chamber 17.

The first contoured openings 59 are formed at a part of the overlying holes 57 of the first ion-conducting membrane 19.

Alternated with the first contoured openings 59 there are, in the first diffusion gasket 58, transit holes 61, which are adapted to allow the passage of the second flow of water 24, to be desalinated, toward the underlying reaction chambers.

Similarly, on the opposite side of the first diffusion gasket 58, at the second contoured discharge openings 60, further transit holes 62 are defined for the second flow 24.

Within the first diffusion gasket 58 there is a biplanar mesh 63 for generating turbulence, which is adapted to stir the water flow.

Such biplanar mesh 63, a portion of which is shown in Figure 3a, is provided with two layers of filaments 63a and 63b, which are mutually substantially perpendicular and have a wedge-like cross-section, a configuration that makes it possible to use the maximum ion exchange surface of the ion-conducting membranes 19 and 20; moreover, such type of mesh drastically reduces the possible formation of dead regions on the ion-conducting membranes between which it is enclosed, thus making it possible to increase the current density limit, i.e. the maximum density of electric current (ratio of electric current to surface of the electrode) that can pass through the electrodialysis machine 10.

The biplanar mesh 63 introduces turbulence into the water flow along its entire route from the first contoured openings 59, for inflow, to the second contoured openings 60, for discharge, so that it optimally flows over the ion-conducting membranes 19 and 20 which form the walls of the reaction chamber 17, thus diminishing the thickness of the boundary layer, such boundary layer being the principal cause of inefficiency of the electrodialysis process.

The second ion-conducting membrane 20 also has holes 64 and 65 for the passage of the first 22 and second 24 water flows, which descend either from the contoured openings 59 and 60 or from the interposed holes 61 and 62.

The second reaction chamber 18 is compressed between the second ion-conducting membrane 20 and the underlying further first ion-conducting membrane 19a, by interposition of a second diffusion gasket 66, with a corresponding biplanar mesh 67 inside it for generating turbulence, similar to the biplanar mesh 63 described above.

Such second diffusion gasket 66 has first contoured openings 68 at the holes 61 of the first diffusion gasket 58, for the transit of the second flow 24, so that the second reaction chamber 18 is crossed by the second flow 24 of water to be desalinated.

Second contoured openings 69 are arranged below the holes 62 of the first diffusion gasket 58, again for the transit of the second water flow 24.

Alternated with the contoured openings 68 and 69 there are transit holes 70 and 71 for the first water flow 22 which passes through the first reaction chamber 17.

The first reaction chamber 17 is thus crossed by the first water flow 22, whereas the second reaction chamber 18 is crossed in the reverse direction by the second water flow.

The cations C migrate from the second flow 24 to the first flow 22 through the membrane 20.

The underlying further first membrane 19a is identical with the first membrane 19 described above.

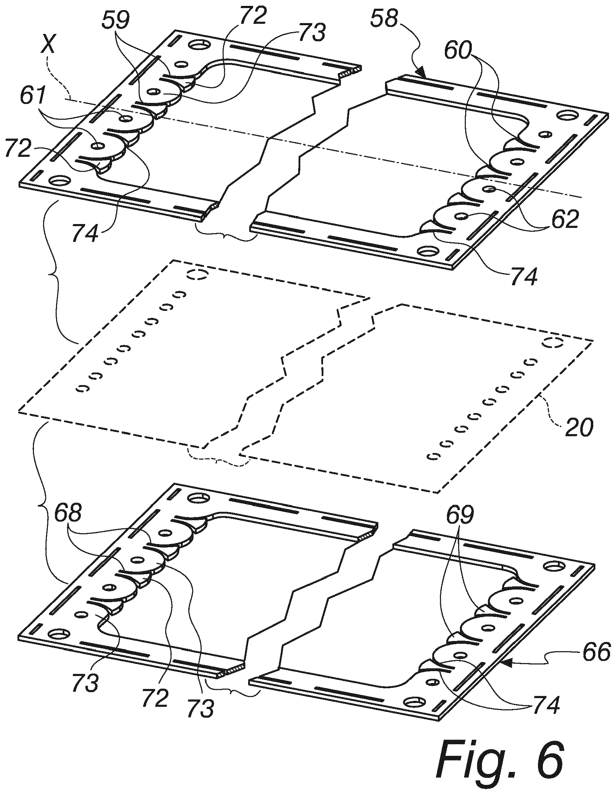

Advantageously the second diffusion gasket 66 is provided by the rotation through 180° of a first diffusion gasket 58 about its own longitudinal axis X, as shown in Figure 6.

In this manner a single type of diffusion gasket can be provided and used alternatively to provide a first gasket 58 or a second gasket 66 depending on the configuration of use.

Figure 6 also clearly shows the contoured openings 59, 60, 68 and 69, each one of which has a particular central fan-like tab 72, which form, together with adjacent half-disk portions 73 of that gasket, curved channels 74 through which the water flows 22 or 24 pass.

Such curved channels 74 provide the incoming flow with a direction and initial turbulence, such as to optimize and equalize the distribution of the water flow over the adjacent ion-conducting membranes 19 and 20.

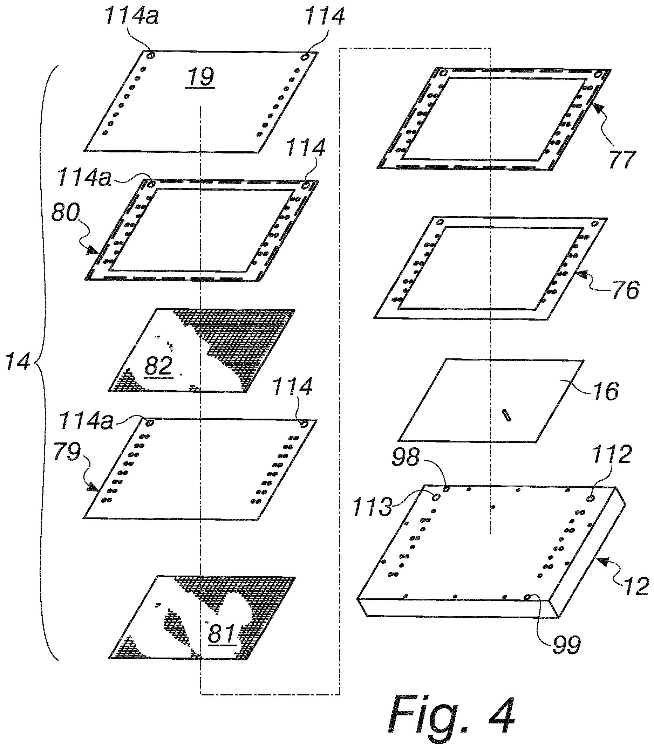

Figure 4 is an exploded view of the second lower electrode chamber 14, which, similarly to the first one 13, comprises the electrode 16 formed directly against the lower head 12, a first sealing gasket 76, a second distribution gasket 77, an ion-conducting shielding membrane 79, a third distribution gasket 80 and respective interposed biplanar meshes 81 and 82, all as described above for the first electrode chamber 13.

As mentioned above, the lower electrode chamber 14 is also supplied by an independent hydraulic circuit 26 comprising a fourth pump 83.

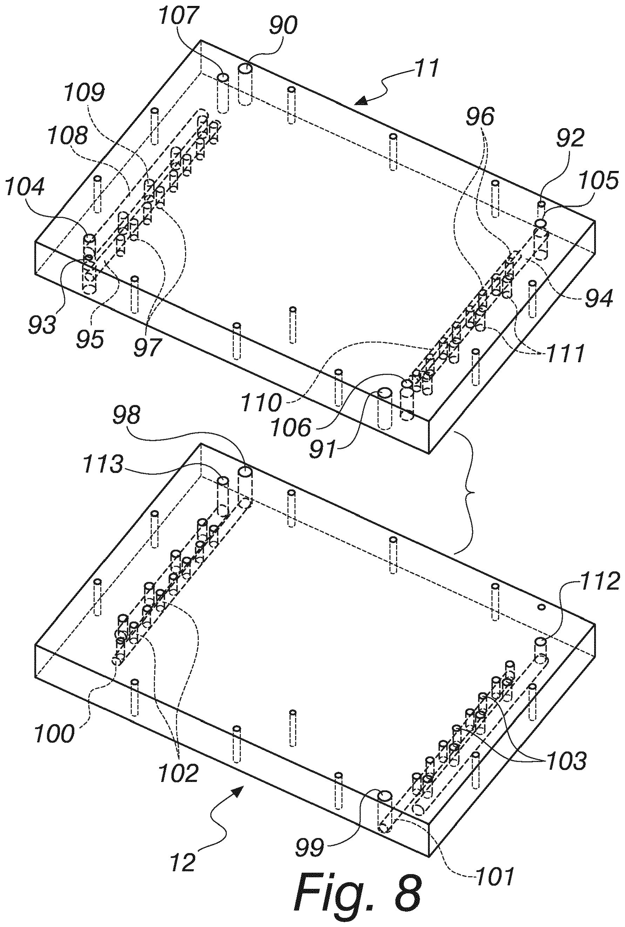

The heads 11 and 12, which are clearly illustrated in Figure 8, not only have the structural function of closing the pack of layers that define the electrode chambers and the reaction chambers, which are coupled to each other by way of adapted rods which are not shown for the sake of simplicity, but also have the task of acting as hydraulic distributors, inflow and outflow channels being defined in them for the hydraulic circuits associated with the electrode chambers, and for the hydraulic circuits associated with the first 22 and second 24 water flows.

With reference to Figure 8, the upper head 11 has, at a first corner region, a through hole 90 for feeding the lower electrode chamber 14, and, in the diagonally opposite corner region, a through hole 91 which is an outlet from the lower electrode chamber 14.

In a third, symmetrically opposite corner region there is a dead hole 92 for feeding the upper electrode chamber 13, and, diagonally opposite, a dead hole which is an outlet from the upper electrode chamber 13.

From the vertical dead holes 92 and 93 corresponding transverse horizontal holes 94 and 95 extend, which are adapted to conduct the water flow to or from the vertical holes for introduction and discharge 96 and 97, which are open onto the first holes 34 and 35 of the first, sealing gasket 33.

The through holes 90 and 91 for the lower electrode chamber 14 are connected via corresponding external pipes, which are not shown for the sake of simplicity, with corresponding dead holes 98 and 99 formed in the lower head 12.

Similarly to the above description of the upper head 11, from the vertical dead holes 98 and 99 corresponding transverse horizontal holes 100 and 101 extend, which are adapted to conduct the water flow to, or from, vertical holes for introduction and discharge 102 and 103, which are open onto the first holes 34 and 35 of the corresponding first, sealing gasket 76.

The upper head 11 moreover has a dead hole 104 as an inlet for a first water flow, for example the first flow 22, and a diagonally opposite dead hole 105 as an outlet for the first flow 22.

Symmetrically there are a dead hole 106 as an inlet for the second water flow 24 and a dead hole 107 as an outlet for the second water flow 24.

From the inlet hole 104 for the first flow 22 a transverse hole 108 extends that leads to vertical holes 109 that are open onto the second holes 37 of the first sealing gasket 33 and thus toward the underlying corresponding holes of the successive gaskets that define the reaction chambers.

Similarly to the inlet hole 106 of the second flow 24, a horizontal transverse hole 110 extends and is connected to corresponding vertical holes 111 for the introduction of the second flow 24 into the second holes 38 of the first, sealing gasket 33.

The two flows 22 and 24 pass through the series of alternating reaction chambers from the top down, and are collected by the lower head 12 which reroutes them back to the upper head 11 by way of respective return holes 112 for the first flow 22 and 113 for the second flow 24.

The upward flows pass through corresponding channels which are formed by the superimposition of adapted holes 114 and 114a which are provided in the gaskets and in the membranes that are overlaid to form the reaction chambers and the electrode chambers.

The hydraulic means 27 for the exchange of the first and second water flows comprise a series of conduits that are connected to each other by the interposition of distribution valves that are adapted to automatically select the incoming and outgoing flows from the first 21 and second 23 hydraulic circuits that are defined in the electrodialysis machine 10.

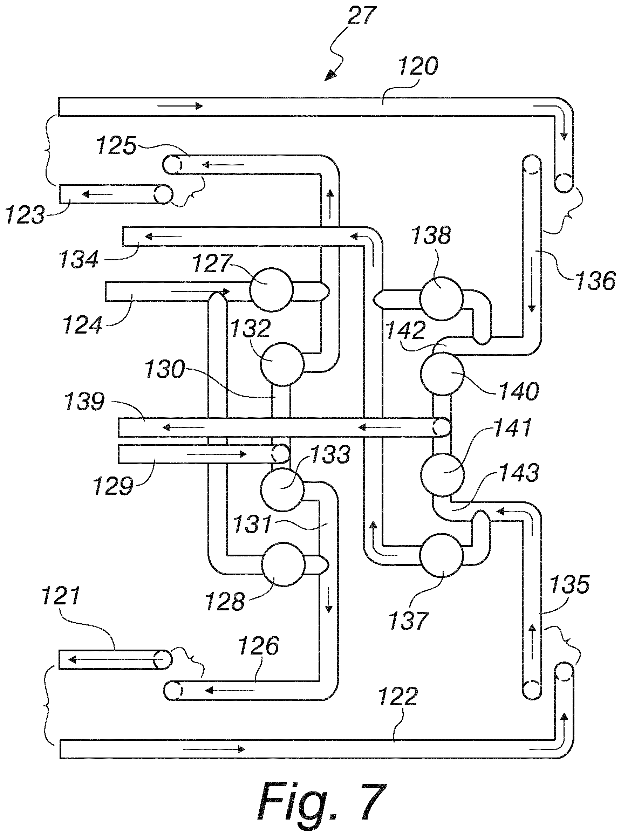

In the schematic diagram seen from above in Figure 7 there are:
- a feed conduit 120 for the lower electrode chamber, connected to the through hole of the upper head 11,
- a return conduit 121 from the lower electrode chamber, connected to the through hole in the upper head 11;
- a feed conduit 122 for the upper electrode chamber;
- a conduit 123 for discharge from the upper electrode chamber;
- a conduit 124 returning upward from the first tank 29, of water with high salinity, from which two first branches 125 and 126 extend each one of which is affected by a corresponding solenoid valve 127 and 128, which are alternately open, each first branch 125 and 126 leading to one of the two hydraulic circuits, first or second;
- a conduit 129 returning upward from the second tank 31, of desalinated water, from which two second branches 130 and 131 extend each one of which rejoins a first branch 125 and 126 of the return conduit 124 from the first tank 29 by interposition of corresponding solenoid valves 132 and 133;
- a first descending conduit 134, toward the first tank 29, which is rejoined by the discharge conduit 135 of a first hydraulic circuit and the discharge conduit 136 of the second hydraulic circuit, with interposition of a corresponding solenoid valve 137 or 138;
- a second descending conduit 139, toward the second tank 31, which is rejoined by the discharge conduit 135 of a first hydraulic circuit and the discharge conduit 136 of the second hydraulic circuit, with interposition of a further corresponding solenoid valve 140 or 141, each arranged on a corresponding branch 142 and 143 of the discharge conduits 135 and 136.

The hydraulic switching is performed in the operation of inverting the polarities of the electrodes 15 and 16, and by proceeding thus, the reaction chambers exchange their functionality, thus causing the washing of the ion-conducting membranes 19 and 20.

With direct polarization, the solenoid valves 127, 133, 137 and 140 are open, and the others closed; with inverted polarization the solenoid valves assume the opposite status, and the first and second water flows switch hydraulic transit circuits in the reaction chambers.

There are transitional states to empty the full reaction chambers, with a flow of water with high salinity transferred to the first tank 29, and progressive filling of those same reaction chambers with a flow of water to be desalinated or diluted.

The seal of the stack of gaskets and membranes that are pressed between the two heads 11 and 12 is ensured by the presence of a plurality of perimetric openings, for example 150 and 151 in the second gasket 39 in Figure 2, in which the edges of the ion-conducting membranes are pinched, both for screening and for participating in the desalination; in this manner such ion-conducting membranes, which are elastically deformable, are held by the edges to close the stack between the two heads and, in compression, they do not impinge on the transit holes for water flows which are defined in the gaskets.

The logic for driving the electrodialysis machine 10 according to the invention involves an automatic controller that, based on the continuous acquisition of essential process parameters, adjusts the intensity of the current injected into the desalination column across the electrodes for the purpose of maximizing the hourly productivity of the electrodialysis machine, while at the same time allowing the exploitation of the active elements of the electrodialysis machine 10 within the limits below which an acceptable operational lifetime of the components of the electrodialysis machine is guaranteed.

The supply of electricity to power the electrodialysis machine can occur from the local mains, or from renewable sources, or from self-contained systems.

Such an electrodialysis machine according to the invention 10 can be dimensioned for production of up to 100 liters per hour of desalinated water, starting from the maximum salinity that can be processed.

It is possible to deploy the parallel operation of a plurality of electrodialysis machines according to the invention in order to meet a higher requirement of the end user.

The electrodialysis machine 10 is self-contained and can be easily transported to places that are difficult to reach, thanks to a structure that is robust and stable.

In practice it has been found that the invention fully achieves the intended aim and objects.

In particular, with the invention an electrodialysis machine has been devised that is capable of enabling a greater and stronger flow of ions between the electrodes, and is thus capable of higher efficiency than conventional apparatuses, thanks to the above-mentioned systems for washing the ion-conducting membranes, and thanks to the details that increase the turbulence of the water flow in the reaction chambers.

Moreover, with the invention an electrodialysis machine has been devised in which the functionality of the ion-conducting membranes can be easily restored without resorting to costly chemical additives.

Moreover, with the invention an electrodialysis machine has been devised that is capable of ensuring the functionality of the electrodes, thanks to the independent electrode chambers and to the ion-conducting screen membranes.

What is more, with the invention an electrodialysis machine has been devised that has a much higher hourly productivity than conventional devices, and is capable of treating brackish waters with a high degree of salinity, approximately 55,000 microSiemens per centimeter, in order to reduce the saline content thereof at will.

Last but not least, with the invention an electrodialysis machine has been devised for desalinating water with a high concentration of dissolved salts, which can be made using conventional systems and technologies.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. An electrodialysis machine (10) for desalinating water with a high concentration of dissolved salts, comprising, between two heads (11, 12),
two opposite electrode chambers (13, 14), which contain electrodes (15, 16) having opposite polarities, between which a plurality of reaction chambers of two alternating types are arranged, first ionic enrichment chambers (17) and second ionic depletion chambers (18), each chamber of a first type being open onto a laterally adjacent chamber of the second type by interposition of an ion-conducting membrane (19, 20), said first chambers (17) being hydraulically connected to each other and to said heads so as to form a first hydraulic circuit (21) for the transit of a first water flow (22) with ionic enrichment, said second chambers (18) being hydraulically connected to each other and to said heads so as to form a second hydraulic circuit (23) for the transit of a second water flow (24), which is being desalinated,
hydraulic means (27) for the exchange of first (22) and second (24) water flows being provided,
each electrode chamber (13, 14) being supplied by a corresponding independent hydraulic circuit (25, 26),
each one of the electrode chambers (13, 14) being formed directly against the adjacent distribution head (11, 12) and comprising the flat electrode (15, 16), which is made of biplanar metallic mesh, said electrode (15, 16) being arranged within a first flat sealing gasket (33, 76), which is provided with first holes (34, 35), to be understood as part of the hydraulic circuit (25, 26) associated with the electrode (15, 16), for the entry and the exit of the water pumped by a dedicated pump (36, 83), in said first sealing gasket (33) second holes (37, 38) being also provided for the passage of the water flows (22, 24), which cooperate in defining the first (21) and second (23) hydraulic circuits, adjacent to the first gasket (33) a second distribution gasket (39, 77) being positioned, which is provided with first distribution holes (40) which are open toward the inside of the second gasket (39, 77) so as to form nozzles for introducing the water flow inside the electrode chamber (13, 14), and first discharge manifold holes (41) which are formed on the opposite side of the second gasket (39, 77) and are also open toward the inside of said second gasket (39, 77), said second gasket (39, 77) having second holes (42, 43) for the passage of the water flows (22, 24), which cooperate in defining the first (21) and second (23) hydraulic circuits,
inside the second gasket (39, 77) there being provided a biplanar mesh (44, 81), which is adapted to promote turbulence in the electrode chamber (13, 14),
an ion-conducting shielding membrane (45, 79) being arranged in contact with the second gasket (39, 77) and with the biplanar mesh (44, 81) and being adapted to prevent the migration, to the adjacent reaction chambers (17, 18), of any unwanted products of the electrolytic reactions that occur at the electrode (15), said shielding membrane (45, 79) being closed between the second gasket (39, 77) and a third similar distribution gasket (50, 80), inside the third gasket (50, 80) a second biplanar mesh (55, 82) being provided, which is adapted to promote the turbulence of the water flow in transit,
said electrode chamber (13, 14) terminating in a first, active ion-conducting membrane (19, 20), said first ion-conducting membrane (19, 20) having only holes (56, 57) for the passage of the water flows (22, 24), which cooperate in defining the first (21) and second (23) hydraulic circuits, whereas there are no holes at the first holes of the adjacent third gasket (50, 80) for the transit of the water flow of the hydraulic circuit (25, 26) associated with the electrolytic chamber (13, 14), said water flow being thus contained within the third gasket (50, 80), and
each reaction chamber (17, 17a, 17b, 17c, 17d, 18, 18a, 18b) comprising, between two first (19) and second (20) ion-conducting membranes, an interposed diffusion gasket (58, 66), which has on one side first contoured openings (59, 69) for the inlet of a flow of water and, on the opposite side, second contoured openings (60, 68) for the outlet of said water flow from the reaction chamber, said contoured openings (59, 60, 68, 69) being formed at the overlying holes (56, 57, 64, 65) of the adjacent ion-conducting membranes, in alternation with the contoured openings (59, 60, 68 69), in the diffusion gaskets (58, 66), transit holes (61, 62, 70, 71) being provided which are adapted to allow the passage of the water flows toward the underlying reaction chambers.

2. The electrodialysis machine according to claim 1, **characterized in that** said first hydraulic circuit (21) for said first flow (22) comprises a first pump (28) adapted to draw from a first tank of water with high salinity (29), and is adapted to discharge the first flow (22), which is enriched with ions, into said first tank (29), said second hydraulic circuit (23) for said second flow (24) comprising a second pump (31) adapted to draw either from said first tank (29) or from a second tank (31) of water to be desalinated, and is adapted to discharge said second flow (24), of desalinated water, into said second tank (31).

3. The electrodialysis machine according to claim 1, **characterized in that** inside each diffusion gasket (58, 66) there is a biplanar mesh (63, 67) for generating turbulence, which is adapted to stir the water flow.

4. The electrodialysis machine according to claim 3, **characterized in that** said biplanar mesh (63) is provided with two layers of filaments (63a, 63b) which are mutually substantially perpendicular and have a wedge-like cross-section.

5. The electrodialysis machine according to claim 1, **characterized in that** said contoured openings (59, 60, 68, 69) are each formed by a central fan-like tab (72) which forms, together with nearby half-disk portions (73) of said gasket, curved channels (74) through which the water flows (22, 24) pass.

## Patentansprüche

1. Eine Elektrodialysemaschine (10) zum Entsalzen von Wasser mit einer hohen Konzentration von gelösten Salzen, die zwischen zwei Köpfen (11, 12) zwei gegenüberliegende Elektrodenkammern (13, 14) umfasst, welche Elektroden (15, 16) mit entgegengesetzten Polaritäten enthalten, zwischen denen eine Vielzahl von Reaktionskammern zweier alternierender Typen angeordnet ist, erste Ionen-Anreicherungskammern (17) und zweite Ionen-Verbrauchskammern (18), wobei jede Kammer eines ersten Typs durch Zwischenschaltung einer Ionenleitmembran (19, 20) zu einer seitlich angrenzenden Kammer des zweiten Typs hin offen ist, wobei die ersten Kammern (17) hydraulisch miteinander und mit den Köpfen verbunden sind, um einen ersten Hydraulikkreislauf (21) für den Durchlauf eines ersten Wasserstroms (22) mit Ionenanreicherung zu bilden, wobei die zweiten Kammern (18) hydraulisch miteinander und mit den Köpfen verbunden sind, um einen zweiten Hydraulikkreislauf (23) für den Durchlauf eines zweiten Wasserstroms (24) zu bilden, der entsalzt wird,
wobei Hydraulikmittel (27) für den Austausch erster (22) und zweiter (24) Wasserströme bereitgestellt sind,
wobei jede Elektrodenkammer (13, 14) von einem entsprechenden unabhängigen Hydraulikkreislauf (25, 26) versorgt wird,
wobei jede der Elektrodenkammern (13, 14) direkt gegen den benachbarten Verteilkopf (11, 12) geformt ist und die Flächenelektrode (15, 16) umfasst, die aus biplanarem Metallnetz besteht, wobei die Elektrode (15, 16) in einer ersten flachen Abdichtung (33, 76) angeordnet ist, die mit ersten Löchern (34, 35) versehen ist, zu verstehen als Teil des Hydraulikkreislaufs (25, 26), verbunden mit der Elektrode (15, 16), für den Eintritt und Austritt des Wassers, das von einer hierzu bestimmten Pumpe (36, 83) gepumpt wird, wobei in der ersten Abdichtung (33) außerdem zweite Löcher (37, 38) für den Durchdritt der Wasserströme (22, 24) angebracht sind, die beim Bestimmen des ersten (21) und des zweiten (23) Hydraulikkreislaufs zusammenwirken, wobei angrenzend an die erste Abdichtung (33) eine zweite Verteilabdichtung (39, 77) positioniert ist, die mit ersten Verteillöchern (40) versehen ist, welche zur Innenseite der zweiten Abdichtung (39, 77) hin offen sind, um Düsen zum Eintragen des Wasserstroms in die Elektrodenkammer (13, 14) zu bilden, und erste Ablass-Verteilerlöcher (41), die auf der gegenüberliegenden Seite der zweiten Abdichtung (39, 77) geformt und auch zur Innenseite der zweiten Abdichtung (39, 77) hin offen sind, wobei die zweite Abdichtung (39, 77) zweite Löcher (42, 43) für den Durchtritt der Wasserströme (22, 24) hat, die beim Bestimmen der ersten (21) und zweiten (23) Hydraulikkreisläufe zusammenwirken,
wobei in der zweiten Abdichtung (39, 77) ein biplanares Gitter (44, 81) angebracht ist, das ausgebildet ist, um für Turbulenz in der Elektrodenkammer (13, 14) zu sorgen,
wobei eine ionenleitende Abschirmmembran (45, 79) in Kontakt mit der zweiten Abdichtung (39, 77) und mit dem biplanaren Gitter (44, 81) angeordnet und ausgebildet ist, um die Migration eventueller unerwünschter Produkte der elektrolytischen Reaktionen, die an der Elektrode (15) stattfinden, zu den benachbarten Reaktionskammern (17, 18) zu verhindern, wobei die Abschirmmembran (45, 79) zwischen der zweiten Abdichtung (39, 77) und einer dritten, ähnlichen Verteilabdichtung (50, 80) geschlossen ist, wobei in der dritten Abdichtung (50, 80) ein zweites biplanares Gitter (55, 82) angebracht ist, das ausgebildet ist, um für die Turbulenz des durchströmenden Wassers zu sorgen,
wobei die Elektrodenkammer (13, 14) in einer ersten, aktiven Ionenleitmembran (19, 20) endet, wobei die erste Ionenleitmembran (19, 20) nur Löcher (56, 57) für den Durchtritt der Wasserströme (22, 24) hat, die beim Bestimmen der ersten (21) unmd zweiten (23) Hydraulikkreisläufe zusammenwirken, während es keine Löcher an den ersten Löchern der benachbarten dritten Abdichtung (50, 80) für den Durchtritt des Wasserstroms des Hydraulikkreislaufs (25, 26) gibt, die mit der elektrolytischen Kammer (13, 14) verbunden sind, wodurch der Wasserstrom in der dritten Abdichtung (50, 80) gehalten wird, und
wobei jede Reaktionskammer (17, 17a, 17b, 17c, 17d, 18, 18a, 18b) zwischen zwei ersten (19) und zweiten (20) Ionenleitmembranen eine zwischengeschaltete Diffusionsdichtung (58, 66) umfasst, die auf einer Seite erste konturierte Öffnungen (59, 69) für den Einlass eines Wasserstroms und auf der gegenüberliegenden Seite zweite konturierte Öffnungen (60, 68) für den Auslass des Wasserstroms aus der Reaktionskammer hat, wobei die konturierten Öffnungen (59, 60, 68, 69) an den darüberliegenden Löchern (56, 57, 64, 65) der benachbarten Ionenleitmembranen geformt sind, wobei alternierend mit den konturierten Öffnungen (59, 60, 68, 69), in den Diffusionsdichtungen (58, 66), Transitlöcher (61, 62, 70, 71) angebracht sind, die ausgebildet sind, um den Durchtritt der Wasserströme zu den darunter liegenden Reaktionskammern zu ermöglichen.

2. Die Elektrodialysemaschine gemäß Anspruch 1, **dadurch gekennzeichnet, dass** der erste Hydraulikkreislauf (21) für den ersten Strom (22) eine erste Pumpe (28) umfasst, die ausgebildet ist, um aus einem ersten Wassertank mit hoher Salzigkeit (29) zu ziehen, und ausgebildet, um den ersten Strom (22), der mit Ionen angereichert ist, in den ersten Tank (29) abzulassen, wobei der zweite Hydraulikkreislauf (23) für den zweiten Strom (24) eine zweite Pumpe (31) umfasst, die ausgebildet ist, um entweder aus dem ersten Tank (29) oder aus einem zweiten Tank (31) von Wasser zu ziehen, das entsalzt werden soll, und ausgebildet, um den zweiten Strom (24) von entsalztem Wasser in den zweiten Tank (31) abzulassen.

3. Die Elektrodialysemaschine gemäß Anspruch 1, **dadurch gekennzeichnet, dass** sich in jeder Diffusionsdichtung (58, 66) ein biplanares Gitter (63, 67) zum Erzeugen von Turbulenz befindet, das ausgebildet ist, um den Wasserstrom aufzurühren.

4. Die Elektrodialysemaschine gemäß Anspruch 3, **dadurch gekennzeichnet, dass** das biplanare Gitter (63) mit zwei Schichten von Fäden (63a, 63b) ausgestattet ist, die im Wesentlichen senkrecht zueinander sind und einen keilförmigen Querschnitt haben.

5. Die Elektrodialysemaschine gemäß Anspruch 1, **dadurch gekennzeichnet, dass** die konturierten Öffnungen (59, 60, 68, 69) jeweils von einer zentralen fächerartigen Lasche (72) geformt werden, welche gemeinsam mit nahegelegenen Halbscheiben-Abschnitten (73) der Abdichtung gekrümmte Kanäle (74) bildet, durch welche die Wasserströme (22, 24) verlaufen.

## Revendications

1. Machine d'électrodialyse (10) pour le dessalement d'eau à forte concentration en sels, comportant, entre deux têtes (11, 12),
deux chambres (13, 14) à électrode, lesquelles contiennent des électrodes (15, 16) à polarités opposées, entre lesquelles sont disposées une pluralité de chambres de réaction de deux types alternés, à savoir des premières chambres d'enrichissement en ions (17) et des secondes chambres d'appauvrissement en ions (18), chaque chambre d'un premier type débouchant sur une chambre du second type, adjacente latéralement, par intercalation d'une membrane conductrice d'ions (19, 20), lesdites premières chambres (17) étant reliées hydrauliquement les unes aux autres et auxdites têtes de manière à former un premier circuit hydraulique (21) pour la circulation d'un premier flux d'eau (22) à enrichissement en ions, lesdites secondes chambres (18) étant reliées hydrauliquement les unes aux autres et auxdites têtes de manière à former un second circuit hydraulique (23) pour la circulation d'un second flux d'eau (24) en train d'être dessalé,
des moyens hydrauliques (27) pour l'échange des premier et second flux d'eau (22, 24) étant présents,
chaque chambre (13, 14) à électrode étant alimentée par un circuit hydraulique indépendant correspondant (25, 26),
chacune des chambres (13, 14) à électrode étant formée directement contre la tête de distribution adjacente (11, 12) et comprenant l'électrode plane (15, 16), laquelle est en treillis métallique biplan, ladite électrode (15, 16) étant disposée dans un premier joint d'étanchéité plat (33, 76), muni de premiers trous (34, 35), dont il doit être entendu qu'ils font partie du circuit hydraulique (25, 26) associé à l'électrode (15, 16), pour l'entrée et la sortie de l'eau pompée par une pompe spécifique (36, 83), dans ledit premier joint d'étanchéité (33) étant également ménagés des seconds trous (37, 38) pour le passage des flux d'eau (22, 24), qui coopèrent pour définir les premier (21) et second (23) circuits hydrauliques, au voisinage immédiat du premier joint (33) étant également placé un deuxième joint de distribution (39, 77), lequel est muni de premiers trous de distribution (40) qui débouchent vers l'intérieur du deuxième joint (39, 77) de manière à former des injecteurs pour introduire le flux d'eau à l'intérieur de la chambre (13, 14) à électrode, et des premiers trous (41) de tubulure de refroidissement qui sont formés sur la face opposée du deuxième joint (39, 77) et débouchent eux aussi vers l'intérieur dudit deuxième joint (39, 77), ledit deuxième joint (39, 77) ayant des seconds trous (42, 43) pour le passage des flux d'eau (22, 24), lesquels coopèrent pour définir les premier (21) et second (23) circuits hydrauliques,
à l'intérieur du deuxième joint (39, 77) étant présent un treillis biplan (44, 81) destiné à favoriser des turbulences dans la chambre (13, 14) à électrode,
une membrane de séparation conductrice d'ions (45, 79) étant placée au contact du deuxième joint (39, 77) et du treillis biplan (44, 81) et étant destinée à empêcher la migration, vers les chambres de réaction adjacentes (17, 18), de tous produits indésirables des réactions électrolytiques qui ont lieu au niveau de l'électrode (15), ladite membrane de séparation (45, 79) étant enfermée entre le deuxième joint (39, 77) et un troisième joint de distribution similaire (50, 80), à l'intérieur du troisième joint (50, 80) étant présent un second treillis biplan (55, 82) destiné à favoriser les turbulences du flux d'eau en circulation,
ladite chambre (13, 14) à électrode aboutissant à une première membrane de (19, 20) conductrice d'ions actifs, ladite première membrane (19, 20) conductrice d'ions ayant des trous (56, 57) servant exclusivement au passage des flux d'eau (22, 24), qui coopèrent pour définir les premier (21) et second (23) circuits hydrauliques, alors qu'il n'y a pas de trous au niveau des premiers trous du troisième joint adjacent (50, 80 pour la circulation du flux d'eau du circuit hydraulique (25, 26) associé à la chambre électrolytique (13, 14), ledit flux d'eau étant ainsi retenu dans le troisième joint (50, 80), et
chaque chambre de réaction (17, 17a, 17b, 17c, 17d, 18, 18a, 18b) comprenant, intercalé entre deux première (19) et seconde (20) membranes conductrices d'ions, un joint de diffusion (58, 66) qui a, sur une première face, des premières ouvertures profilées (59, 69) pour l'entrée d'un flux d'eau et, sur la face opposée, des secondes ouvertures profilées (60, 68) pour la sortie dudit flux d'eau de la chambre de réaction, lesdites ouvertures profilées (59, 60, 68, 69) étant formées au niveau des trous (56, 57, 64, 65), situés au-dessus, des membranes adjacentes conductrices d'ions, en alternance avec les ouvertures profilées (59, 60, 68, 69) ménagées dans les joints de diffusion (58, 66), des trous de circulation (61, 62, 70, 71) étant prévus, destinés à permettre le passage des flux d'eau vers les chambres de réaction situées au-dessous.

2. Machine d'électrodialyse selon la revendication 1, **caractérisée en ce que** ledit premier circuit hydraulique (21) pour ledit premier flux (22) comprend une première pompe (28) destinée à prélever dans un premier réservoir d'eau à forte salinité (29), et destinée à refouler le premier flux (22), enrichi en ions, dans ledit premier réservoir (29), ledit second circuit hydraulique (23) pour ledit second flux (24) comprenant une seconde pompe (31) destinée à prélever dans ledit premier réservoir (29) ou dans un second réservoir (31) d'eau à dessaler, et destinée à refouler ledit second flux (24) d'eau dessalée dans ledit second réservoir (31).

3. Machine d'électrodialyse selon la revendication 1, **caractérisée en ce qu'**à l'intérieur de chaque joint de diffusion (58, 66) se trouve un treillis biplan (63, 67) pour créer des turbulences destinées à agiter le flux d'eau.

4. Machine d'électrodialyse selon la revendication 3, **caractérisée en ce que** ledit treillis biplan (63) est pourvu de deux couches de filaments (63a, 63b) qui sont sensiblement perpendiculaires l'une à l'autre et ont une section transversale cunéiforme.

5. Machine d'électrodialyse selon la revendication 1, **caractérisée en ce que** lesdites ouvertures profilées (59, 60, 68, 69) sont formées chacune par une languette centrale en éventail (72) qui forme, conjointement avec des parties voisines en demi-disques (73) dudit joint, des canaux incurvés (74) par lesquels passent les flux d'eau (22, 24).
